# EUROPEAN PATENT APPLICATION

(11) **EP 2 610 799 A1**
(43) Date of publication of application: **03.07.2013**
(21) Application number: 11250940.1
(22) Date of filing: 28.12.2011
(51) Int. Cl.: G06Q 20/32, H04M 1/725

(54) **Mobile communications device providing near field communication (NFC) card issuance features and related methods**

(71) Applicant: Research In Motion Limited, Waterloo, ON N2L 3W8 (CA)
(72) Inventor: Adams, Neil Patrick, Waterloo, ON N2L 3W8 (CA); Singh, Ravi, Mississauga, ON L4W 0B5 (CA); Marcovecchio, Vincenzo, Kazimierz, Kanata, ON K2K 3K1 (CA)
(74) Representative: Bryn-Jacobsen, Caelia

(57) **Abstract**

A communications system may include a provisioning terminal comprising a first near field communications (NFC) device, where the provisioning terminal is capable of communicating with a provisioning server. The system may further include a mobile communications device comprising a second NFC device, a processor capable of providing a mobile wallet interface, a memory, and a memory controller coupled with the second NFC device, the memory, and the processor. The memory controller may be capable of receiving an applet and associated mobile wallet interface data from the provisioning server via the provisioning terminal based upon NFC communication between the first NFC device and the second NFC device, storing the applet and the associated mobile wallet interface data in the memory, and sending the mobile wallet interface data from the memory to the processor for the mobile wallet interface.

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile communications devices. This short-range high frequency wireless communications technology exchanges data between devices over a short distance, such as only a few centimeters.

### Brief Description of the Drawings

FIG. 1 is a schematic block diagram of a communications system in accordance with an example aspect.

FIGS. 2 and 3 are flow diagrams illustrating example method aspects associated with the system of FIG. 1.

FIGS. 4-6 are a series of front views of an example mobile communications device illustrating provisioning features of the system of FIG. 1 and the methods of FIGS. 2-3.

FIG. 7 is a schematic block diagram illustrating example mobile communications device components that may be used with the mobile communications devices shown in FIGS. 1 and 4-6.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communications system is provided herein which may include a provisioning terminal comprising a first near field communications (NFC) device, where the provisioning terminal is capable of communicating with a provisioning server. The system may further include a mobile communications device comprising a second NFC device, a processor capable of providing a mobile wallet interface, a memory, and a memory controller coupled with the second NFC device, the memory, and the processor. The memory controller may be capable of receiving an applet and associated mobile wallet interface data from the provisioning server via the provisioning terminal based upon NFC communication between the first NFC device and the second NFC device, storing the applet and the associated mobile wallet interface data in the memory, and sending the mobile wallet interface data from the memory to the processor for the mobile wallet interface. Accordingly, the system may advantageously allow for instant issuance of a NFC payment card, security card, etc., to the mobile communications device, and without the need for over-the-air (OTA) provisioning, for example.

More particularly, the memory may have a data transfer applet stored therein, and the memory controller may be capable of invoking the data transfer applet to receive the applet and associated mobile wallet interface data. Furthermore, the memory controller may be capable of providing a notification to the processor based upon NFC communication between the first NFC device and the second NFC device, and the processor may be capable of querying the memory controller to determine whether the data transfer application was invoked based upon the notification. In addition, the processor may be further capable of causing the secure element controller to send the mobile wallet interface data based upon the secure element controller invoking the data transfer applet.

In accordance with one example embodiment, the memory controller may be capable of receiving the applet and the associated mobile wallet interface data during a same transaction. By way of example, the provisioning server may comprise a trusted service manager (TSM) server, and the memory controller may be capable of storing the applet and the associated mobile wallet interface data in the memory only when the memory controller receives the applet and the associated mobile wallet interface data from the TSM server, for example. Additionally, the mobile wallet interface data may include graphic data, for example.

A related mobile communications device, such as the one described briefly above, and a related communications method are also provided. The communications method may include establishing a near field communications (NFC) link between a mobile communications device and a provisioning terminal, where the provisioning terminal may be capable of communicating with a provisioning server. The method may further include receiving an applet and associated mobile wallet interface data from the provisioning server via the provisioning terminal based upon the NFC communication between the provisioning terminal and the mobile communications device, storing the applet and the associated mobile wallet interface data in the memory, and sending the mobile wallet interface data from the memory to the processor for the mobile wallet interface.

A related computer-readable medium for a mobile communications device, such as the one described briefly above, is also provided. The computer-readable medium may have computer executable instructions for causing the mobile communications device to perform steps including establishing a NFC link between a mobile communications device and a provisioning terminal, the provisioning terminal being capable of receiving data from a provisioning server, receiving an applet and associated mobile wallet interface data from the provisioning server via the provisioning terminal based upon the NFC communication between the provisioning terminal and the mobile communications device, and sending the mobile wallet interface data from the memory to the processor for the mobile wallet interface.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

With respect to NFC-enabled security tokens, such as plastic credit cards, security (e.g., physical access) cards, etc., some trusted service managers (TSMs) offer a service known as "instant issuance". Typically, only a TSM may write or modify data (e.g., payment account applets, secure account data, etc.) to the memory on an NFC-enabled device. With instant issuance, a customer or user is able to walk into a bank branch, for example, apply for a payment card (e.g., a credit or debit card), and have the card prepared for him, fully personalized and with a provisioned NFC device, a short time later (i.e., within the same visit). Such provisioning is enabled through a secure channel from the bank's instant issuance computer or terminal to the bank's TSM, and a printing device which prints and embosses the plastic card. By way of example, the secure channel may be implemented in accordance with the GlobalPlatform Card Specification v2.2, or other suitable secure channel architecture.

While the above-described instant issuance approach generally works for plastic payment (or security) cards, problems may arise when attempting to provision mobile communications devices (also referred to herein as "mobile devices") for electronic or "soft" payment cards through such an instant issuance process. For example, plastic payment card personalization simply involves printing and embossing the plastic card. However, personalization for a mobile device involves downloading or receiving appropriate applet data for the secure element, as well as graphics or other data for the soft card for a mobile or electronic wallet (e-wallet) running on the mobile device.

Such mobile device personalization is currently performed through over-the-air (OTA) communications. However, this may be problematic because it assumes the mobile device has cellular or other wireless network data access (e.g., wireless LAN (WLAN) or WiFi, etc.), which may not be the case. For example, the mobile device might be in a location where wireless network coverage is poor or unavailable. In another example, a user may be traveling in a foreign country, and the mobile device may not be configured for use with the local communications systems (e.g., a local SIM card has not yet been obtained for the mobile device).

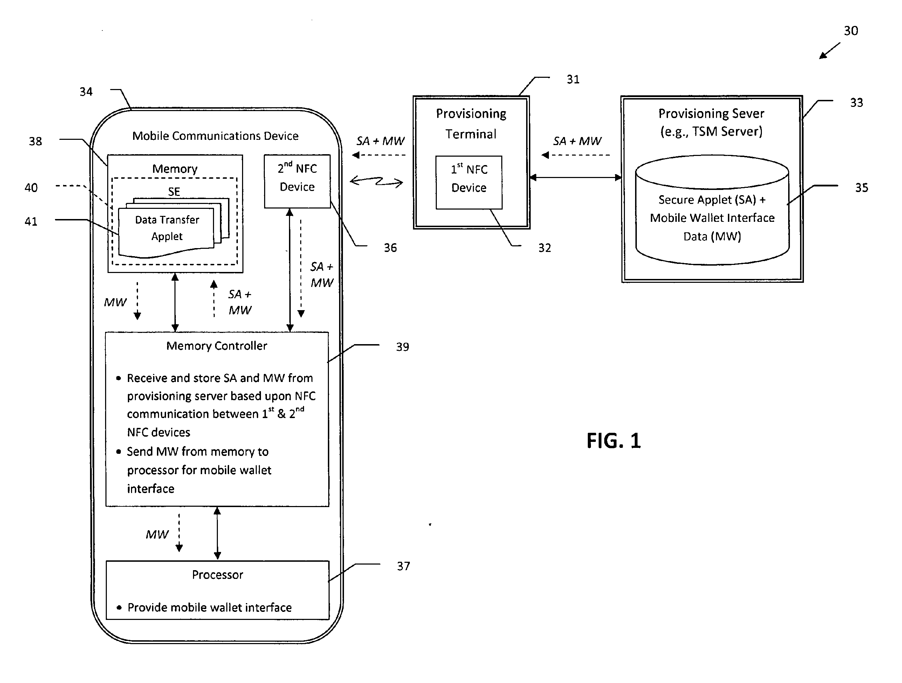

Referring initially to FIGS. 1 through 3, a communications system 30 and related method aspects are first described which may advantageously help address the above-noted problems associated with provisioning of mobile devices. The system 30 illustratively includes a provisioning terminal 31 comprising a first NFC device 32, and the provisioning terminal 31 may be configured to communicate with a provisioning server 33. The system 30 further illustratively includes a mobile device 34. By way of example, the provisioning terminal 31 may comprise a computer at a branch of a financial institution, and the first NFC device 32 may comprise an NFC reader coupled with the computer. It should be noted that while the examples herein are provided with reference to issuance of NFC-based payment credentials, such as a soft NFC payment card from a financial institution (e.g., a bank), the approach described herein may also be used with security institutions (e.g., issuers of NFC soft cards for gate or building access), or other institutions that issue personalized NFC-based transaction authorization credentials or soft cards. In some configurations, the computer and NFC reader may be included within a same physical housing, although they may also be separate physical devices coupled together via a wired (e.g., USB, etc.) or wireless connection (e.g., Bluetooth, WLAN, etc.) in other embodiments.

The provisioning server 33 may comprise a TSM server, which may be a dedicated TSM for the financial institution, or a TSM that handles provisioning for a particular type of mobile device 34 (e.g., the TSM may be provided by the manufacturer of the mobile device or a network carrier, such as a cellular network carrier). The TSM further illustratively includes a database or memory 35 configured to store the appropriate applet (e.g., a secure applet (SA)) and mobile wallet information (e.g., graphics data, etc.) for provisioning the mobile device 34 with the soft payment card or other payment credentials. As noted above, the provisioning terminal **31** and the provisioning server **33** may communicate via a secure channel, such as a GlobalPlatform channel or other suitable secure channel architecture.

The mobile device **34** illustratively includes a second NFC device **36,** a processor **37** configured to provide a mobile wallet interface, a memory **38,** and a memory controller **39** coupled with the second NFC device **36,** the memory **38,** and the processor **37.** By way of example, the memory **38** may define a secure element **40,** and the memory controller **39** may comprise a secure element controller. Moreover, the memory **38** may comprise a subscriber identity module (SIM) card, an electronic universal integrated circuit card (eUICC), a removable memory, an SD card, an embedded memory, etc., for example. Also, the memory (e.g., secure element) controller **39** may be included within an NFC chip set (along with the memory **38** in some example embodiments).

Example mobile devices **34** may include portable or personal media players (e.g., music or MP3 players, video players, etc.), portable gaming devices, portable or mobile telephones, smartphones, portable computers (e.g., tablet computers), digital cameras, etc. The processor **37** may be implemented using suitable hardware (e.g., microprocessor, memory, etc.) and a computer-readable medium with computer-executable instructions configured to perform the various operations described herein, for example.

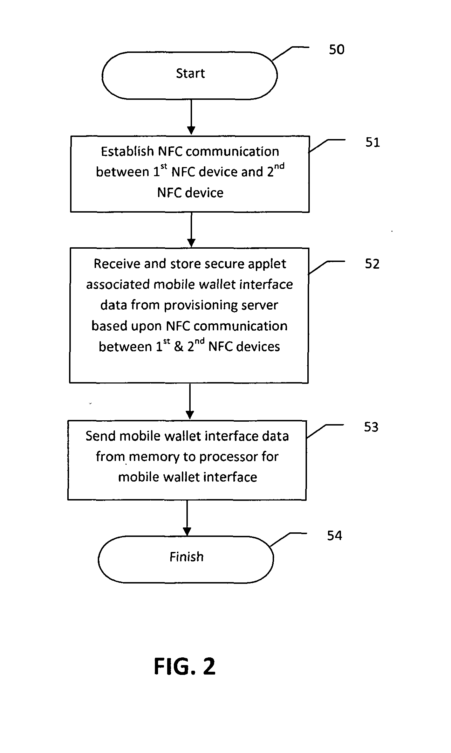

Beginning at Block **50,** when the mobile device **34** and the provisioning terminal **31** come within NFC communication range and establish NFC communication, at Block **51,** the memory controller **39** and the provisioning sever **33** cooperate to receive or download the secure applet and associated mobile wallet interface data (e.g., card graphics data, driver, etc) from the database **35** and store or write this data to the memory **38** based upon the NFC communication between the first NFC device **32** and the second NFC device **36.** That is, the mobile wallet interface data and the secure applet may be downloaded via NFC communication from the provisioning terminal **31** to the secure element **40.** However, in some example embodiments a handover or handoff to a different communications medium besides NFC (e.g., Bluetooth, etc.) may occur for downloading at least some of this data. Furthermore, the memory controller **39** may also be configured to read or send the mobile wallet interface data from the memory **38** to the processor **37** for the mobile wallet interface, at Block **53,** which concludes the example method illustrated in FIG. 2 (Block **54).** The memory controller 39 may also be configured to not read the secure applet data from the memory **38** to the processor **37,** to thereby help keep this data secure.

Accordingly, the system **30** may advantageously allow for instant issuance of a NFC payment card, security card, etc., to the mobile device **34,** and without the need for over-the-air (OTA) provisioning, for example. That is, the mobile wallet interface data, which would typically have to be downloaded to the mobile device **34** through a separate OTA transaction (e.g., first downloading a mobile wallet application, which subsequently causes the memory controller **39** to download the secure applet from a TSM). This may advantageously allow for provisioning where an OTA connection is not otherwise available, and may also advantageously avoid the need for downloading a separate secure applet installation application. Moreover, the secure applet provisioning may be performed based upon straightforward initiation of NFC communication between the mobile device **34** and the provisioning terminal **31.**

In accordance with an example embodiment, the secure element **40** may have a data transfer applet **41** stored therein. The data transfer applet **41** may be a dedicated applet installed by a mobile device manufacturer, for example, that is invoked by the memory controller **39** to perform the instant issuance operations described herein (e.g., download of the mobile wallet interface data from the provisioning server **33,** and reading of the mobile wallet interface data to the processor **37).** That is, the memory controller **39** may be configured to invoke the data transfer applet **41** to download the associated mobile wallet interface data from the provisioning server **33** in a single or same transaction (i.e., during a same session with the provisioning server).

As noted above,- typically only a TSM may be permitted to write or modify data on a secure element. Including the data transfer applet **41** in the secure applet advantageously allows the download process to be initiated from the memory controller **39** without the need for a separate application to be installed on the mobile device **38** ahead of time via an OTA connection. Moreover, this allows the memory controller **39** to retain a secure architecture, such that write or data modification access to the secure element **40** is not permitted by the memory controller **39** except via the provisioning server **33.** That is, use of the data transfer applet **41** advantageously allows the memory controller **39** to be configured to permit only the provisioning server **33** to download data to the secure element **40,** while still allowing the mobile device **34** to be provisioned with the appropriate mobile wallet interface data and secure applet data without the need for an OTA connection or prior download of an installation application for each respective soft card to be added to the mobile device.

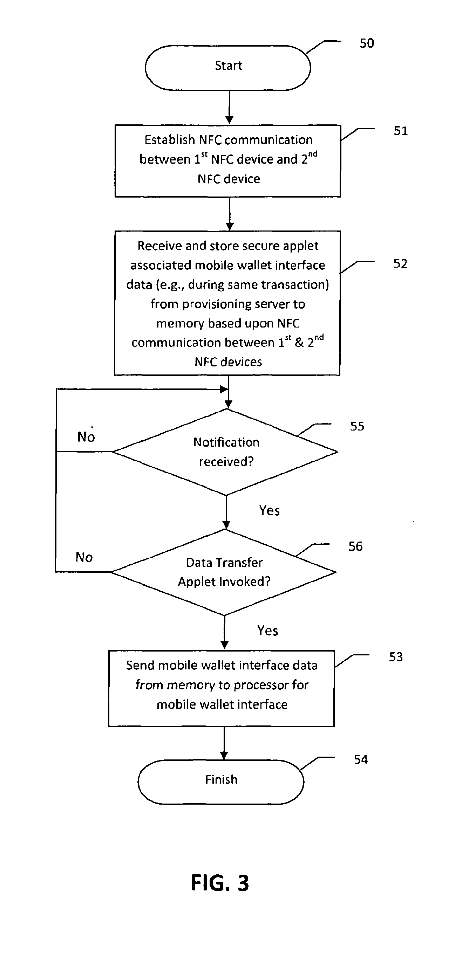

The memory controller **39** may be configured to provide a notification to the processor **37** based upon NFC communication between the first NFC device **32** and the second NFC device **36**, at Block **55** (FIG. 3). More specifically, the memory controller **39** may be configured to provide the processor **37** with a notification when the second NFC device **36** enters an NFC field or initiates NFC communication, or similarly when the second NFC device **36** leaves an NFC field or ceases NFC communication. By way of example, the processor **37** and the memory controller **39** may communicate via a dedicated communications channel, such as a JSR-177 channel, for example, although other suitable channel architectures may be used in different embodiments.

Upon receiving a notification of NFC communication from the memory controller **39,** the processor **37** may be configured to query the memory controller **39** to determine whether the data transfer application **41** was invoked, at Block **56.** If so, the processor **37** may then cause or prompt the memory controller **39** to read the mobile wallet interface data from the secure element **40,** so that this data may be used by the processor **37** to provide the mobile wallet interface for card selection.

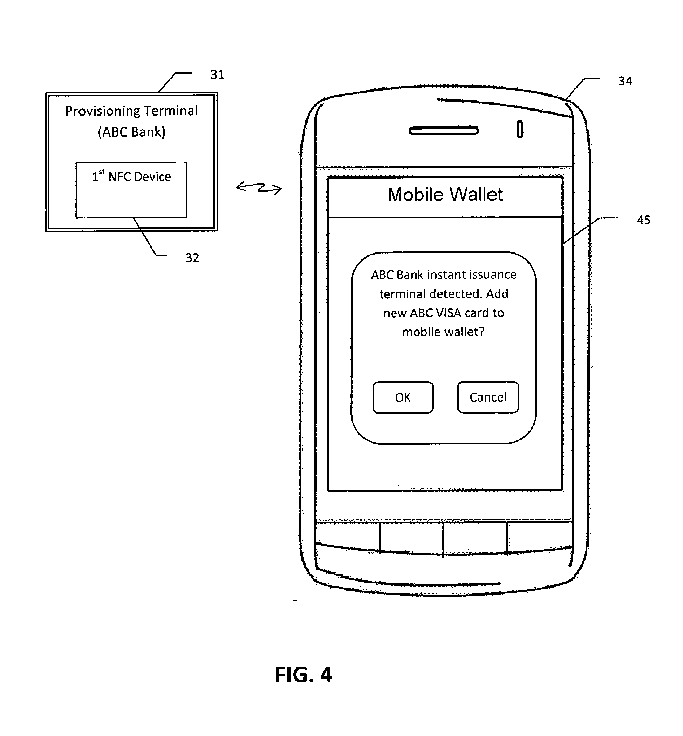

The foregoing will be further understood with reference to an example embodiment, which is now described with reference to FIGS. **4** through 6. In the example embodiment, an instant issuance approach is used to provision the secure element **40** to provide the appropriate secure applet for a soft card, and the associated mobile wallet interface data (e.g., card graphics data, driver, etc.) to the mobile device **34.** The data transfer applet **41,** which may have a pre-configured or predetermined applet identification (AID), is provisioned onto the secure element **40,** such as at the time of manufacturing. The data transfer applet **41** may advantageously be implemented to cause data to be written to the secure element **40** over a GlobalPlatform secure channel, and to cause data to be read from the secure element **40** over an interface with the processor **37** (e.g., a JSR-177 interface), as noted above, although other suitable formats or architectures may also be used. The data transfer applet **41** may optionally also be configured to cause the mobile wallet interface data to be deleted from the secure element **40,** such as after reading of this data to the processor **37** is complete.

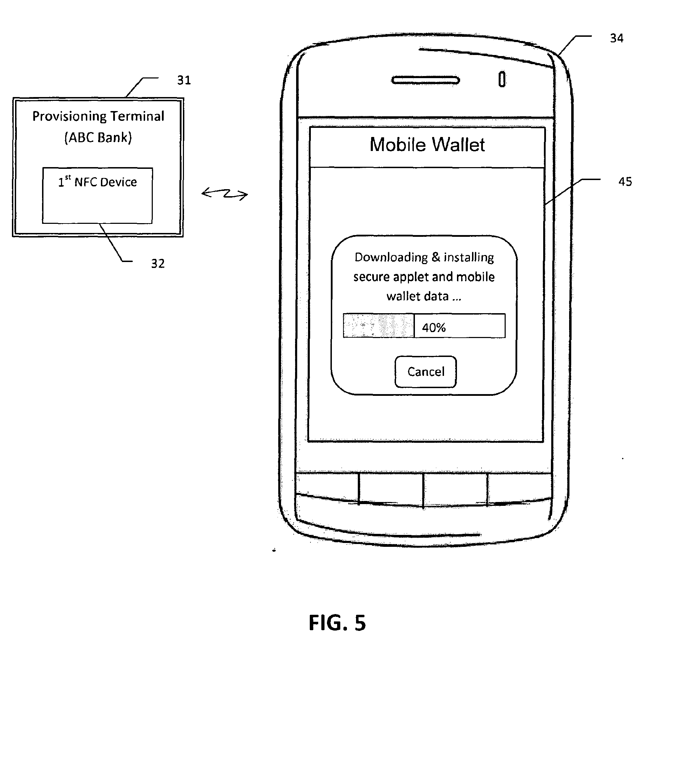

In an example instant issuance implementation, a client or user places the mobile device **34** adjacent the first NFC device **32** of the provisioning terminal **33.** As shown on a display **45** (e.g., a touch screen display) of the mobile device **34,** a notification screen may be provided to advise of the instant issuance process, and "OK" and "cancel" selection options are provided to confirm whether provisioning of the given soft card is desired. In the example, the soft card is a payment card (e.g., a VISA credit card) from ABC Bank. Upon confirmation that the mobile device **34** is to be provisioned with the soft payment card, the provisioning terminal **31** proxies a secure channel from the secure element **40** to the provisioning server **33.** The provisioning server **33** downloads, installs and personalizes (i.e., provisions) the necessary secure applet data on the secure element **40,** as shown in FIG. 5. Moreover, the provisioning server **33** further selects the data transfer applet **41** and writes, over the secure channel, the mobile wallet interface data for a mobile wallet "plug-in" and associated graphics that will correspond to the soft card in the mobile wallet.

Upon removing the mobile device **34** from the field of the provisioning terminal **31,** which discontinues NFC communication between the first NFC device **32** and the second NFC device **36,** a transaction listener (which may be implemented by the processor **37** as part of the mobile wallet) recognizes that the data transfer applet **41** was selected during the last transaction. As noted above, this may be done responsive to the notification from the memory controller **39** to the processor **37** of the second NFC device **36** ceasing NFC communication with the first NFC device **32.** However, in other embodiments, the processor **37** may detect use of the second NFC device **36** in other ways, such as the way in which power is supplied to the second NFC device **36** (e.g., switching between active or passive NFC modes, or to a low power scan rate after NFC communication is complete, etc.).

After determining that the data transfer applet **41** has been invoked, the processor **37** (through the mobile wallet interface) opens a JSR-177 channel to the secure element **40** and reads the mobile wallet interface data that was written to the secure element **40** by the data transfer applet **41.** The mobile wallet interface parses the mobile wallet interface data, as appropriate, and installs it as a plug-in for the mobile wallet (although it may be installed as a separate or stand-alone application in some embodiments). The mobile wallet interface may optionally send an appropriate command(s) to the memory controller **39** to invoke the data transfer applet **41** to clear the mobile wallet interface data that was downloaded from the provisioning server **33** from the secure element **40.** The mobile wallet interface may then close the JSR-177 channel with the memory controller **39.**

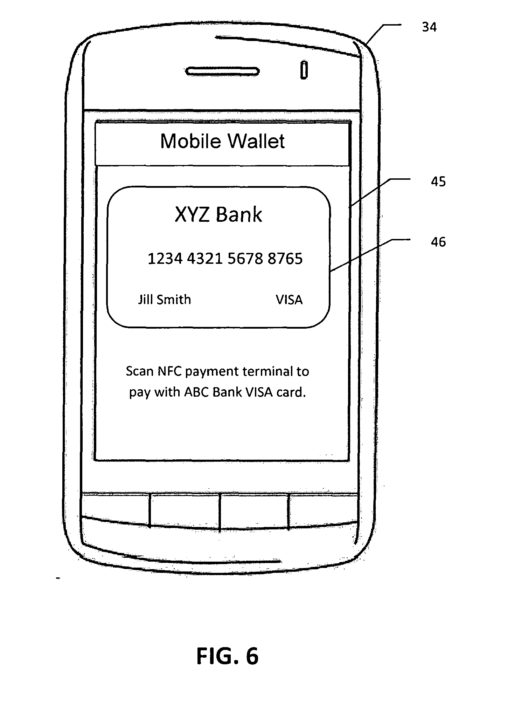

At this point, the secure element **40** has advantageously been provisioned with the necessary applet or applets, and the mobile wallet on the mobile device **34** has the necessary plug-ins to interact with those applets. The instant issuance and personalization process is complete, without the mobile device **34** needing to use an OTA (e.g., cellular) data connection. As shown in FIG. 6, a graphic **46** of a credit card is shown on the display **45** in the mobile wallet, along with an indication that the mobile device **34** may now used to perform NFC payment transactions with the new soft credit card. In the illustrated example, the card graphic **46** includes the appropriate credit card information, such as the issuing bank name ("ABC Bank"), a credit card account number ("1234 4321 5678 8765"), a user name ("Jill Smith"), and a credit card type ("VISA"). Here again, it should be noted that other payment card types, as well as other types of soft cards (e.g., security or access cards, etc.), may also be provisioned on mobile device **34** using the above-described approach.

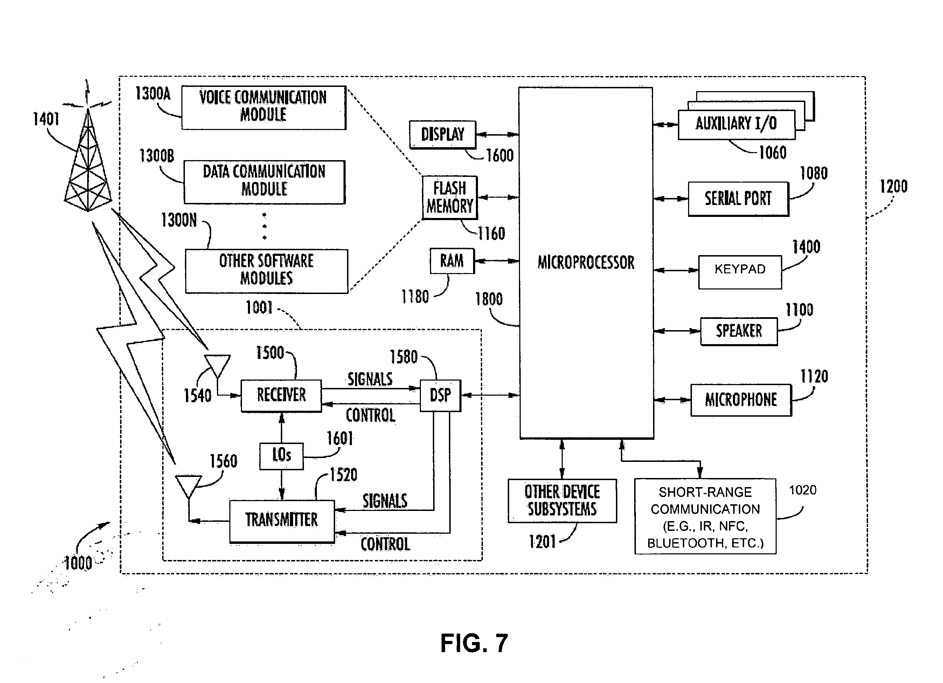

Example components of a mobile communications device **1000** that may be used in accordance with the above-described embodiments are further described below with reference to FIG. 7. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration-or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a near field communications (NFC) device (which may include a NFC transceiver and NFC controller, for example) for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system comprising:
a provisioning terminal comprising a first near field communications (NFC) device, the provisioning terminal being capable of receiving data from a provisioning server; and
a mobile communications device comprising
a second NFC device,
a processor capable of providing a mobile wallet interface,
a memory, and
a memory controller coupled with the second NFC device, the memory, and the processor, the memory controller being capable of
receiving an applet and associated mobile wallet interface data from the provisioning server via the provisioning terminal based upon NFC communication between the first NFC device and the second NFC device,
storing the applet and the associated mobile wallet interface data in the memory, and
sending the mobile wallet interface data from the memory to the processor for the mobile wallet interface.

2. The communications system of Claim 1 wherein the memory has a data transfer applet stored therein; and wherein the memory controller is capable of invoking the data transfer applet to receive the applet and associated mobile wallet interface data.

3. The communications system of Claim 1 wherein the memory controller is capable of receiving the applet and the associated mobile wallet interface data during a same transaction.

4. The communications system of Claim 1 wherein the provisioning server comprises a trusted service manager (TSM) server; and wherein the memory controller is capable of storing the applet and the associated mobile wallet interface data in the memory only when the memory controller receives the applet and the associated mobile wallet interface data from the TSM server.

5. The communications system of Claim 1 wherein the memory comprises a secure element.

6. The communications system of Claim 1 wherein the mobile wallet interface data comprises graphic data.

7. A mobile communications device comprising:
a near field communications (NFC) device;
a processor capable of providing a mobile wallet interface;
a memory, and
a memory controller coupled with the NFC device, the memory, and the processor, the memory controller being capable of
receiving an applet and associated mobile wallet interface data via the NFC device,
storing the applet and the associated mobile wallet interface data in the memory, and
sending the mobile wallet interface data from the memory to the processor for the mobile wallet interface.

8. The mobile communications device of Claim 7
wherein the memory has a data transfer applet stored therein; and wherein the memory controller is capable of invoking the data transfer applet to receive the applet and the associated mobile wallet interface data.

9. The mobile communications device of Claim 8
wherein the memory controller is capable of providing a notification to the processor; and wherein the processor is capable of querying the memory controller to determine whether the data transfer application was invoked.

10. The mobile communications device of Claim 9
wherein the processor is further capable of causing the memory controller to send the mobile wallet interface data based upon the memory controller invoking the data transfer applet.

11. The mobile communications device of Claim 7
wherein the memory controller is capable of receiving the applet and the associated mobile wallet interface data during a same transaction.

12. A communications method comprising:
establishing a near field communications (NFC) link between a mobile communications device and a provisioning terminal, the provisioning terminal being capable of receiving data from a provisioning server, and wherein the mobile communications device comprises a processor capable of providing a mobile wallet interface, a memory, and a memory controller coupled with the memory and the processor;
receiving an applet and associated mobile wallet interface data from the provisioning server via the provisioning terminal using the memory controller based upon the NFC communication between the provisioning terminal and the mobile communications device;
storing the applet and the associated mobile wallet interface data in the memory; and
sending the mobile wallet interface data from the memory to the processor for the mobile wallet interface using the memory controller.

13. The method of Claim 12 wherein the memory has a data transfer applet stored therein; and wherein receiving comprises invoking the data transfer applet to receive the applet and associated mobile wallet interface data.

14. The method of Claim 13 further comprising:
sending a notification to the processor based upon NFC communication; and
determining whether the data transfer application was invoked based upon the notification.

15. The method of Claim 12 wherein receiving further comprises receiving the applet and the associated mobile wallet interface data during a same transaction.

## Amended claims

### Amended claims in accordance with Rule 137(2) EPC.

**1.** A communications system (30) comprising:
a provisioning terminal (31) comprising a first near field communications "NFC" device (32), the provisioning terminal being capable of receiving data from a provisioning server (33); and
a mobile communications device (34) comprising
a second NFC device (36),
a processor (37) capable of providing a mobile wallet interface,
a memory (38), and
a memory controller (39) coupled with the second NFC device, the memory, and the processor, the memory controller being capable of
receiving an applet and associated mobile wallet interface data from the provisioning server via the provisioning terminal based upon NFC communication between the first NFC device and the second NFC device,
storing the applet and the associated mobile wallet interface data in the memory, and
sending the mobile wallet interface data from the memory to the processor for the mobile wallet interface.

**2.** The communications system (30) of Claim 1 wherein the memory (38) has a data transfer applet (41) stored therein; and wherein the memory controller (39) is capable of invoking the data transfer applet to receive the applet and associated mobile wallet interface data.

**3.** The communications system (30) of Claim 1 wherein the memory controller (39) is capable of receiving the applet and the associated mobile wallet interface data during a same transaction.

**4.** The communications system (30) of Claim 1 wherein the provisioning server (33) comprises a trusted service manager "TSM" server; and wherein the memory controller (39) is capable of storing the applet and the associated mobile wallet interface data in the memory (38) only when the memory controller receives the applet and the associated mobile wallet interface data from the TSM server.

**5.** The communications system (30) of Claim 1 wherein the memory (38) comprises a secure element (40).

**6.** The communications system (30) of Claim 1 wherein the mobile wallet interface data comprises graphic data.

**7.** A mobile communications device (34) comprising:
a near field communications "NFC" device (36);
a processor (37) capable of providing a mobile wallet interface;
a memory (38), and
a memory controller (39) coupled with the NFC device, the memory, and the processor, the memory controller being capable of
receiving an applet and associated mobile wallet interface data via the NFC device,
storing the applet and the associated mobile wallet interface data in the memory, and
sending the mobile wallet interface data from the memory to the processor for the mobile wallet interface.

**8.** The mobile communications device (34) of Claim 7 wherein the memory (38) has a data transfer applet (41) stored therein; and wherein the memory controller (39) is capable of invoking the data transfer applet to receive the applet and the associated mobile wallet interface data.

**9.** The mobile communications device (34) of Claim 8 wherein the memory controller (39) is capable of providing a notification to the processor (37); and wherein the processor is capable of querying the memory controller to determine whether the data transfer application was invoked.

**10.** The mobile communications device (34) of Claim 9 wherein the processor (37) is further capable of causing the memory controller (39) to send the mobile wallet interface data based upon the memory controller invoking the data transfer applet.

**11.** The mobile communications device (34) of Claim 7 wherein the memory controller (39) is capable of receiving the applet and the associated mobile wallet interface data during a same transaction.

**12.** A communications method comprising:
establishing a near field communications "NFC" link between a mobile communications device (34) and a provisioning terminal (31), the provisioning terminal being capable of receiving data from a provisioning server (33), and wherein the mobile communications device comprises a processor (37) capable of providing a mobile wallet interface, a memory (338), and a memory controller (39) coupled with the memory and the processor;
receiving an applet and associated mobile wallet interface data from the provisioning server via the provisioning terminal using the memory controller based upon the NFC communication between the provisioning terminal and the mobile communications device;
storing the applet and the associated mobile wallet interface data in the memory; and
sending the mobile wallet interface data from the memory to the processor for the mobile wallet interface using the memory controller.

**13.** The method of Claim 12 wherein the memory (38) has a data transfer applet (41) stored therein; and wherein receiving comprises invoking the data transfer applet to receive the applet and associated mobile wallet interface data.

**14.** The method of Claim 13 further comprising:
sending a notification to the processor (37) based upon NFC communication; and
determining whether the data transfer application was invoked based upon the notification.

**15.** The method of Claim 12 wherein receiving further comprises receiving the applet and the associated mobile wallet interface data during a same transaction.
